# FASCICULE DE BREVET EUROPEEN

(11) **EP 2 313 228 B1**
(45) Date de publication et mention de la délivrance du brevet: **26.12.2012**
(21) Numéro de dépôt: 09761891.2
(22) Date de dépôt: 12.05.2009
(51) Int. Cl.: B23K 9/173, B23K 35/02, B23K 35/30, B23K 35/38, B23K 35/40

(54) **FIL FOURRE DE SOUDAGE MIG/MAG SANS LAITIER CONTENANT DU LITHIUM AVEC GAZ A BASE DE CO2; PROCEDE DE SOUDAGE A L'ARC ELECTRIQUE DE TYPE MIG/MAG EMPLOYANT UN TEL FIL FOURRE**
SCHLACKEFREIER MIG/MAG-FLUSSMITTELKERNSCHWEISSDRAHT MIT LITHIUM MIT EINEM GAS AUF CO2-BASIS SOWIE VERFAHREN ZUR ELEKTRISCHEN MIG/MAG-BOGENSCHWEISSUNG MIT EINEM SOLCHEN SCHWEISSDRAHT
SLAG-FREE MIG/MAG FLUX-CORED WIRE CONTAINING LITHIUM WITH CO2-BASED GAS, AND METHOD FOR MIG/MAG ELECTRIC-ARC WELDING USING SUCH FLUX-CORED WIRE

(30) Priorité: 20.05.2008 FR 0853274
(43) Date de publication de la demande: 27.04.2011
(73) Titulaire: L'Air Liquide Société Anonyme pour l'Etude et l'Exploitation des Procédés Georges Claude, 75007 Paris (FR); AIR LIQUIDE WELDING FRANCE, 75007 Paris (FR); Université d'Orleans, 45067 Orleans Cedex 2 (FR)
(72) Inventeur: VALENSI, Flavien, F-31400 Toulouse (FR); BRIAND, Francis, F-75009 Paris (FR); MOINE GALAND, Elodie, F-92400 Courbevoie (FR); PELLERIN, Stéphane, F-18220 Rians (FR); PELLERIN, Nadia, F-18220 Rians (FR); DE IZARRA, Charles, F-18000 Bourges (FR); MUSIOL, Karol, PL-31-875 Krakow (PL)
(74) Mandataire: Pittis, Olivier
(86) Numéro de dépôt international: PCT/FR2009/050863
(87) Numéro de publication internationale: WO 2009/150340

(56) Documents cités:
- EP-A- 1 775 060
- GB-A- 1 391 487
- US-A- 3 778 587
- US-A- 4 999 478
- US-A- 5 857 141
- US-A1- 2006 186 103

## Description

L'invention porte sur un fil fourré sans laitier conformément an préamble de la revendication (voir, par example, EP1 775 060), de type « metal cored », c'est-à-dire avec éléments de remplissage pulvérulents et/ou granulaires, principalement métalliques, pour le soudage à l'arc électrique de type MIG/MAG des aciers présentant des caractéristiques de transfert du type « spray arc » avec des courants modérés, lorsque mis en oeuvre avec un mélange gazeux Ar/CO₂ contenant au moins 30% en volume de CO₂, ainsi qu'un procédé de soudage MIG/MAG utilisant ce fil (voir revendication 12).

Le soudage à l'arc de type MIG/MAG des aciers avec utilisation d'un fil fusible et d'un gaz de protection formé d'un mélange gazeux à base d'argon présente en général plusieurs types de transfert de matière différents entre l'extrémité en fusion du fil fusible et le bain de soudage situé sur la ou les pièces à souder.

Le fait que le fil soit mû ou entrainé à une vitesse très variable durant le soudage engendre l'existence de plusieurs régimes de fonctionnement conduisant à des caractéristiques de soudage complètement différentes.

En effet, la stabilité de l'ensemble dévidage du fil/ fusion du fil implique que la vitesse moyenne de fusion du fil soit égale à la vitesse d'avance de ce fil, ce qui induit une dépendance entre les paramètres régissant la vitesse de fusion, principalement le courant, et la vitesse du fil. De là, selon la valeur du courant et celle de la tension, qui représente en partie la "hauteur d'arc", la manière dont le métal en fusion est transféré du fil vers le bain liquide, varie notablement.

Il existe ainsi principalement trois régimes de transfert différents selon l'intensité du courant mis en oeuvre.

Ainsi, à basses intensités, c'est-à-dire typiquement de 80 à 150 A environ, et pour des tensions relativement faibles, c'est-à-dire de l'ordre de 17 à 20V, l'effet Joule et la chaleur dégagée par l'arc fondent l'extrémité du fil en formant une goutte de métal fondu. Le fil continuant à avancer, la goutte vient au contact du bain de soudage et il se produit alors un court-circuit, du fait d'une extinction de l'arc. C'est à ce moment que la goutte est détachée, puis transférée dans le bain. Quand le transfert est effectué, l'arc se réamorce et le processus peut ainsi recommencer et se poursuivre. On a alors un régime de transfert par courts-circuits ou "short-arc" où, lors de chaque court-circuit, c'est-à-dire de l'ordre de 30 à 200 fois par seconde, une partie du métal en fusion passe de l'extrémité du fil au bain de soudage. Il faut noter que ce type de transfert est très utilisé pour les faibles épaisseurs, c'est-à-dire de moins de 4 mm, car l'énergie moyenne de soudage est relativement faible. Il est également utilisé pour le soudage en position verticale montante ou au plafond, par exemple. Il faut également noter que ce régime de transfert conduit à des "hauteurs d'arc" assez petites, c'est-à-dire d'environ 1 à 2 mm (sous faibles tensions) car, par essence, il nécessite une proximité immédiate de l'extrémité du fil et du bain de soudure.

A moyennes intensités, c'est-à-dire de l'ordre de 150 à 250 A, on se situe dans le régime globulaire. Ce régime de transfert est assez peu utilisable en pratique car, pour des hauteurs d'arc pratiques de soudage, il conduit à un transfert de matière erratique et à d'importantes projections. Dans ce régime, la goutte peut croître démesurément et soit exploser avant tout contact avec la tôle, soit être transférée aussi par court-circuit mais dans de mauvaises conditions et souvent à l'extérieur du bain.

A fortes intensités, c'est-à-dire plus de 250 A, et pour une tension de l'ordre d'environ 33 à 35 V, on entre dans le régime de pulvérisation axiale ou "spray-arc", dans lequel un chapelet de petites gouttes de métal fondu s'échappe régulièrement de l'extrémité du fil en fusion. Le courant est, dans ce cas, suffisamment élevé pour expulser les gouttes formées avant tout contact avec la tôle. Ce régime est synonyme de fortes pénétrations et d'importants taux de dépôts. Il est généralement utilisé pour un soudage à plat, dès que l'épaisseur est suffisante, c'est-à-dire d'au moins 4 mm, car l'énergie moyenne de soudage est alors importante.

Par ailleurs, il existe également un quatrième régime de transfert, moins naturel, c'est le régime pulsé. Dans ce cas, on soude en pulsant le courant, c'est-à-dire en choisissant des paramètres de pulsation de telle sorte qu'il y ait pour chacun des pulses, un transfert de type pulvérisation axiale avec une seule goutte par pulse. Dans ce cas, le régime est forcé, c'est à dire que l'on impose la forme du courant en choisissant soigneusement les paramètres de la pulsation afin que le résultat soit probant. Typiquement, les fréquences des pulsations vont de 50 à 300 Hz suivant la vitesse d'avance du fil. Cela nécessite des générateurs, à transistors par exemple, où l'on peut imposer la forme du courant en fonction du temps.

A l'origine, le régime pulsé a été mis au point pour pallier aux inconvénients du régime globulaire qui, de par son mode de transfert instable et son caractère projetant, ne permettait pas d'augmenter la productivité dans des conditions de soudage acceptables. Ainsi, pour les aciers et les aciers inoxydables, dès que l'on veut augmenter la quantité de métal déposé en conservant des propriétés d'emplois corrects, il faut augmenter le courant car, sans pulser le courant, on rentre rapidement dans le régime globulaire, avec les inconvénients qui en résultent.

Toujours pour la même raison, le régime pulsé autorise le soudage en position qui n'est bien souvent pas praticable en régime globulaire. De plus, le caractère non projetant du régime pulsé, quand la synergie de soudage est correctement faite, permet de diminuer les opérations de parachèvement, notamment sur les aciers inoxydables.

Il trouve également un champ d'application intéressant quand on le compare au régime de pulvérisation axiale qui, en nécessitant un courant de soudage assez élevé et en induisant un taux de dépôt et une largeur de bain important, n'est généralement utilisé que sur des épaisseurs à souder conséquentes, c'est-à-dire d'au moins 4mm, et en position horizontale, c'est-à-dire en soudage à plat. En permettant, à vitesse de fil identique, donc à quantité de métal déposé identique, de réduire l'énergie de soudage, le régime pulsé remédie en partie à ces inconvénients et autorise, suivant l'assemblage à réaliser, le soudage en position avec une qualité de transfert comparable à celle du régime spray-arc.

Il est également très utilisé pour le soudage des alliages légers, tel l'aluminium par exemple, pour lesquels les régimes par courts-circuits et globulaire sont difficilement utilisables du fait des défauts qu'ils occasionnent, tel que porosités et collage. Dans ce cas, le régime pulsé permet de souder correctement avec des énergies qui autorisent le soudage des faibles épaisseurs, typiquement jusqu'à 1 mm, ainsi que le soudage en position, alors que le régime spray-arc, traditionnellement employé, est plutôt synonyme de productivité.

Il faut noter que ces quatre régimes différents de soudage apparaissent aussi bien avec des fils pleins ou solides qu'avec des fils fourrés de type « metal cored », c'est-à-dire avec âme formée de poudres principalement métalliques.

Plus précisément, les fils fourrés « metal cored » sont fabriqués à partir d'une enveloppe ou feuillard métallique, par exemple en acier, que :
- soit l'on vient progressivement mettre sous la forme d'une gouttière formant un pré-tube (forme en U), remplir d'un mélange adéquat de poudres, principalement métalliques, puis refermer (forme de O), avec ou sans soudage longitudinal, de sorte d'obtenir le fil fourré,
- soit d'un tube vide obtenu par mise en forme et soudage d'un feuillard, puis qui est ensuite rempli dudit mélange de poudres principalement métalliques, généralement agglomérées à l'aide d'un ou plusieurs liants.

Les fils fourrés sont en général une bonne alternative aux fils pleins dès lors que l'on veut disposer d'une composition chimique particulière dans le métal fondu de la soudure. De plus, l'ajout de certains éléments dans le fourrage permet d'améliorer la soudabilité et la souplesse du procédé.

Il a été remarqué que lorsqu'on utilise un mélange gazeux Ar/CO₂ en soudage MIG/MAG des aciers, le seuil de courant qui marque la transition entre le régime globulaire et le régime de pulvérisation axiale augmente avec le pourcentage de CO₂ dans le gaz.

Ainsi, le document de S. Rhee et al, Observation of metal transfer during GMAW, Welding Journal, p. 381-s (1992), montre que, lorsque le pourcentage de CO₂ augmente dans le mélange argon/CO₂, la fréquence de détachement des gouttes diminue et la transition en courant du régime spray augmente.

Ce comportement est assez pénalisant dans la mesure où l'on ne peut guère augmenter le CO₂ dans le mélange au delà de 20% en volume car sinon, on est obligé d'avoir recours à des sources de courant, c'est-à-dire des générateurs de soudage, dont le coût devient rédhibitoire car devant être capables de délivrer des courant moyens extrêmement élevés pour obtenir le régime de pulvérisation axiale désiré.

De la même manière, et pour faire suite à ce qui a été dit sur le régime globulaire, une telle source de courant est également difficilement utilisable car la plage en courant du régime globulaire serait alors très importante.

Il s'ensuit que si l'on souhaite utiliser un mélange gazeux en soudage MIG//MAG plus riche en CO2, c'est-à-dire contenant plus de 30% de CO₂ en volume, alors on doit se passer du régime spray et accepter de souder dans le régime globulaire avec tous les désavantages qui lui sont inhérents.

Il faut également noter que le régime pulsé est hors de portée dès que le mélange devient riche en CO₂ car, comme on l'a vu, le détachement de la goutte est gouvernée par les mêmes lois que le régime spray et que donc il nécessite des courants de pulsation très élevés.

Jusqu'à présent, ce phénomène était expliqué par la répartition du courant dans l'arc. Il était en particulier indiqué que l'emploi du CO₂ à fortes teneurs modifiait la géométrie des lignes de courant et que la direction de la force de Lorentz, responsable du détachement des gouttes, s'en trouvait modifiée. On avait ainsi un détachement erratique, parfois répulsif, qui conduisait à de mauvais transferts de métal fondu entre l'extrémité du fil et le bain de soudage, et occasionnait ainsi de nombreuses projections.

Toutefois, dans le document de S. Zielinska and al, Experimental Investigations on the arc in MIG/MAG Welding, Trends in Welding Research, May 2005, p. 919, il est montré que ce comportement trouve plutôt son origine dans la génération en cours de soudage, tout autour de la goutte, à l'extrémité du fil, d'une gangue d'oxydes isolante électriquement, de viscosité très élevée, qui enveloppe l'extrémité du fil et qui contrarie le détachement du métal fondu tout en modifiant considérablement l'accrochage de l'arc. L'épaisseur de cette gangue croit avec le pourcentage de CO₂ dans le gaz et le passage du régime globulaire au régime de pulvérisation axiale est caractérisé par la vaporisation complète de cette gangue, dès que le courant est suffisamment élevé pour l'évaporer.

Au vu de cela, un problème qui se pose est de réussir à obtenir, en soudage à l'arc de type MIG/MAG, un détachement des gouttes de métal provenant du fil fusible de type arc-spray, malgré la mise en oeuvre d'un courant modéré, c'est-à-dire de l'ordre de 200 à 350A, ce qui correspond à des vitesses d'avance du fil comprises entre 6 m/mn et 12 m/mn pour des fils de diamètre 1,2 mm, et d'un mélange gazeux riche en CO₂, c'est-à-dire contenant plus de 30% en volume de CO₂.

Dit autrement, l'invention vise à améliorer les procédés de soudage à l'arc de type MIG/MAG existant lorsqu'un mélange gazeux contenant plus de 30% en volume de CO₂ est mis en oeuvre.

La solution de l'invention est un fil fourré de soudage sans laitier défini dans la revendication 1.

Le fil fourré de l'invention peut être fabriqué selon la technologie dite « Chemetron^{™} », c'est-à-dire avec feuillard formé en U, rempli de poudres de remplissage, puis formé en O, ou celle dite « Oerlikon^{™} », c'est-à-dire fil tubulaire soudé puis ensuite rempli d'éléments de remplissage.

Selon le cas, le fil de l'invention peut comprendre l'une ou plusieurs des caractéristiques suivantes :
- il contient de 0.015 à 0,070% de carbone, de 0,1 à 0,6% de silicium et/ou de 0.5 à 2% de manganèse.
- il contient de 0.015 à 0,060% de carbone, de 0,1 à 0,5% de silicium et/ou de 0.7 à 2% de manganèse.
- il contient en outre de 0,01 à 0,3% de sodium, de 0,01 à 0,9% de titane et/ou de 0.01 à 0.4% de lanthane.
- l'enveloppe externe est en acier carbone-manganèse.
- la teneur en carbone (C) est comprise entre 0.02% et 0.10% et la teneur en manganèse (Mn) est comprise entre 0.1% et 1% par rapport à la masse totale de l'enveloppe.

L'invention concerne aussi un procédé de soudage à l'arc électrique de type MIG/MAG, mettant en oeuvre un fil fourré fusible et un mélange gazeux de soudage contenant du CO₂, dans lequel on réalise au moins un joint de soudure sur une ou plusieurs pièces métalliques, par fusion progressive par l'arc électrique du fil fourré selon l'invention, tel que décrit précédemment, voir revendication 12.

Selon le cas, le procédé de soudage de l'invention peut comprendre l'une ou plusieurs des caractéristiques suivantes :
- le mélange gazeux de soudage contient du CO₂ en une proportion d'au moins 30% en volume, et de l'argon pour le reste. De préférence, le mélange gazeux de soudage contient du CO₂ en une proportion d'au moins 40% en volume, et de l'argon pour le reste, de préférence une proportion de CO₂ d'au moins 50% en volume.
- le régime de soudage est de type pulsé, spray-arc ou par courts-circuits, de préférence spray-arc.
- le courant est d'au moins 200 A et/ou la tension est comprise entre environ 18V et 35 V.

L'invention sera mieux comprise à la lumière des exemples illustratifs suivants donnés en références aux Figures annexées.

### Exemples

En fait, les inventeurs de la présente invention ont donc mis en évidence qu'en modifiant les propriétés électriques et fluides de la gangue d'oxydes isolante électriquement qui enveloppe l'extrémité du fil, en utilisant lors du soudage MIG/MAG, un fil fourré fusible contenant des éléments appropriés, on arrivait à obtenir un détachement de type spray à des courants modérés avec des mélanges riches en CO₂.

Pour cela, les inventeurs ont mesuré pour différentes compositions de fils et pour différentes teneurs massiques de CO₂, à savoir de 0 à 70% de CO₂ dans l'argon (augmentation de teneur par pas d'au moins 1%) dans un mélange binaire argon/CO₂, la valeur du courant de transition entre le régime globulaire et spray-arc.

Cette valeur de transition a été mesurée en s'appuyant sur 3 critères :
- une observation visuelle de l'arc durant le soudage, grâce à une caméra rapide, qui permet d'obtenir jusqu'à 10000 images par seconde, car la transition entre ces régimes s'accompagne d'un changement de la forme de l'arc : en cloche pour le régime globulaire, en cône pour le régime spray,
- la fréquence de détachement des gouttes qui croît de manière importante, c'est-à-dire au moins le double de la fréquence de détachement du régime globulaire, quand on rentre dans le domaine du transfert arc-spray, et
- l'évolution temporelle de la tension d'arc dont les fluctuations deviennent très faibles, c'est-à-dire d'environ 1 V, dès que le régime de pulvérisation axiale est atteint.

Les inventeurs ont tout d'abord caractérisé un fil massif selon l'art antérieur, qui est repéré Fil 1. Ce fil servira de référence à tout ce qui suit car il est assez largement utilisé en construction métallique, notamment pour le soudage de véhicules de transport terrestres. Il s'agit d'un fil commercialisé par la société Air Liquide Welding sous la référence Nertalic 70S. Il possède un comportement assez typique en termes de transition globulaire/spray.

Deux autres fils massifs de composition sensiblement différente ont été caractérisés de la même façon. Sur la base du meilleur de ces trois fils, à savoir le Fil 2, des variations de composition chimique ont été effectuées grâce à la formulation de fils fourrés de type *« metal cored* ».

Les consommables appelés « Fil x » (avec x de 1 à 3) sont des fils massifs, alors que ceux appelés « G00y » (avec x de 2 à 12) sont des fils fourrés de type «*metal cored* ».

Les (% mass.) sont indiqués par rapport à la masse totale du fil.

L'enveloppe des fils fourrés est constituée par un acier C-Mn. Dans cet exemple, le taux de remplissage est de 17%. La balance est constituée majoritairement de fer.

Le Tableau 1 indique des compositions de fils pleins (Fil x).

**Tableau I**

| Elément (% mass.) | Fil 1 | Fil 2 | Fil 3 |
|---|---|---|---|
| C | 0.09 | 0.07 | 0.9 |
| Si | 0.35 | 0.06 | 0.12 |
| Ti | <0.003 | < 0.003 | < 0.003 |
| Mn | 1.1 | 0.4 | 1.1 |

Ces fils ont été mis testé dans les conditions d'un soudage MIG/MAG avec un générateur de courant de soudage de type SAFMIG 480 TRS équipé d'un kit SAFMIG 480 TR16 capable de délivrer un courant de 20 à 450 A.

La vitesse de fil peut être choisie entre 1 et 20 m/min. Le pas de réglage est de 2 A pour le courant et de 0.1 m/min pour la vitesse de fil. La tension à vide est d'environ 65 V et, en fonctionnement, elle est de 14 à 45 V selon les réglages utilisés.

Le diamètre du fil électrode utilisable est compris entre 0.8 et 1.6 mm. Les essais ont été réalisés avec du fil de diamètre 1.2 mm.

Les essais sont réalisés en polarité inverse, c'est-à-dire avec un fil électrode relié à la borne positive du générateur (anode).

La pièce à souder constitue alors la cathode et est reliée à la masse du générateur.

Pour l'étude des régimes de fonctionnement en fonction du courant et du gaz de protection utilisé, il est nécessaire de contrôler indépendamment chaque paramètre.

Le courant d'arc Iₐᵣₑ est choisi comme consigne et la vitesse d'avance du fil est choisie dans le but d'assurer une longueur d'arc régulière.

Le mode synergie n'est pas utilisé pour régler séparément chaque paramètre, mais les valeurs choisies sont en général proches de celles proposées par le microcontrôleur.

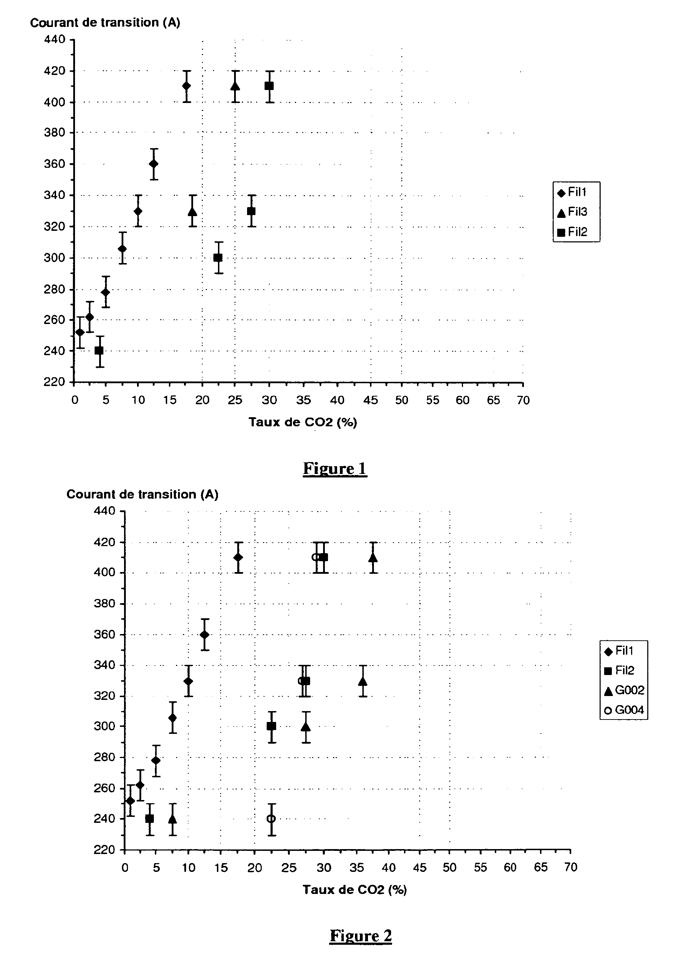

Sur la Figure 1 est représentée l'évolution du courant de transition mesuré en fonction de la quantité de CO₂ dans le mélange CO₂/argon utilisé en combinaison avec les 3 fils pleins différents n° Fil 1, Fil 2 et Fil 3.

On constate que la transition est obtenue pour des taux de CO₂ plus important pour le Fil 3 que le Fil 1, et pour le Fil 2 que pour le Fil 3. La variation de la transition n'est pas dépendante de la teneur en carbone du fil. Pour le Fil 3 contenant un taux de silicium inférieur au fil de référence (Fil 1) et un taux de manganèse équivalent, on constate que la transition est obtenue pour un taux de CO₂ d'autant plus important que le taux de silicium est faible.

Le Fil 2, présentant un taux de silicium encore plus faible, confirme l'influence du silicium sur le positionnement de la transition.

La valeur maximale du taux de CO₂ permettant d'atteindre le régime de pulvérisation axiale est obtenue pour le fil n°Fil 2, avec 30% en volume, contre 17% pour le fil n° Fil 1. Pour un courant faible (240 A), le comportement du fil n°Fil 2 est cependant plus proche de celui du fil n° Fil 1.

Des fils fourrés ont ensuite été formulés sur la base du Fil 2, qui présente la transition globulaire-spray au taux de CO₂ le plus élevé. Les variations de composition chimique ont été effectuées sur le silicium, titane et zirconium, car ces trois éléments sont susceptibles d'influencer la conductivité de la gangue formée autour de la goutte, et donc son détachement.

Les compositions chimiques sont données dans le tableau II.

**Tableau II**

| Elément (% mass.) | G002 | G003 | G004 | G005 | G006 |
|---|---|---|---|---|---|
| C | 0.07 | 0.07 | 0.07 | 0.07 | 0.07 |
| Si | 0.05 | 0.07 | 0.001 | 0.06 | 0.05 |
| Ti | 0.002 | 0.94 | 0.002 | <0.003 | <0.003 |
| Mn | 0.39 | 0.36 | 0.43 | 0.42 | 0.41 |
| Zr | 0.002 | 0.002 | 0.002 | 0.36 | 0.33 |
| La | <0.003 | <0.003 | <0.003 | <0.003 | 0.26 |

Le fil fourré G002 présente une composition chimique similaire à celle du Fil 2.

Sur la Figure 2 est représentée l'évolution du courant de transition mesuré en fonction de la quantité de CO₂ dans le mélange CO₂/argon utilisé en combinaison avec 2 fils pleins (n° Fil 1 et Fil 2 ; cf. Figure 1) et 2 fils fourrés différents (n° G002 et G004).

Le taux limite de CO₂ permettant la pulvérisation axiale est un peu plus élevé pour le fil n°G002 que pour le fil n° Fil 2. Toutefois, l'allure de la répartition des points est tout à fait similaire. L'écart de pourcentage de CO₂ constaté à la transition est très certainement dû à la différence sur le taux de silicium.

Pour le fil n° G004 ne contenant quasiment pas de silicium, la transition est observée à bas courant, c'est-à-dire 240 A, pour un taux de CO₂ beaucoup plus élevé (environ 23% de CO₂ en vol.) que pour les autres fils, à savoir notamment 7% de CO₂ pour le fil n°G002.

Par contre, cet effet disparaît aux courants plus élevés, c'est-à-dire 330 A, pour lesquels les performances obtenues sont semblables au fil n°Fil 2.

Il semble donc exister une limite à l'effet de la teneur en silicium sur la position de la transition.

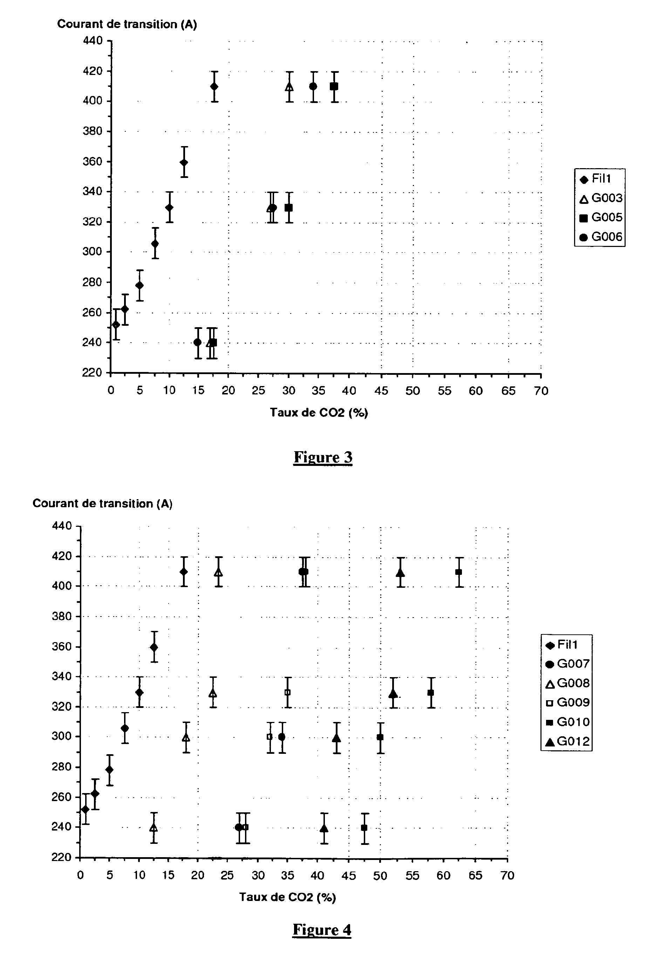

La Figure 3 montre l'évolution du courant de transition mesuré en fonction de la quantité de CO2 dans le mélange CO₂/argon mis en oeuvre pour un fil plein n° Fil 1 et 3 fils fourrés différents n° G003, G005 et G006.

Le fil n°G003 contenant du titane (fort taux : 1% en masse) présente des performances toujours plus faibles que le fil n°G002 mais comparables à celles du fil n°Fil 2 et bien meilleures que celle du fil 1, au moins pour les courants supérieurs à 330 A. Il faut cependant tenir compte du taux de silicium plus élevé.

Le fil n°G005 contenant du zirconium est celui présentant les meilleures performances : avec un taux de silicium égal à celui du fil n°Fil2, on observe une transition comparable à celle obtenue pour le fil n°G002.

Le fil n° G006 avec du zirconium et du lanthane présente par contre un comportement un peu moins bon.

Pour tous ces fils contenant des éléments susceptibles de former des oxydes conducteurs (Zr et/ou Ti et/ou La), la transition est cependant nettement améliorée aux faibles courants, avec des taux de CO₂ supérieurs à 15% à 240 A, contre environ 7% pour le G002.

Le Tableau III indique des compositions de fils fourrés (GOOy) contenant différentes teneurs en métaux alcalins, à savoir le lithium, le potassium et le sodium.

**Tableau III**

| Elément (% mass.) | G007 | G008 | G009 | G010 Conforme à l'invention, voir revendication | G011 Conforme à l'invention, voir revendication | G012 |
|---|---|---|---|---|---|---|
| C | 0.07 | 0.07 | 0.07 | 0.07 | 0.07 | 0.07 |
| Si | 0.007 | 0.01 | 0.008 | 0.06 | 0.32 | 0.01 |
| Mn | 0.34 | 0.34 | 0.34 | 0.35 | 0.35 | 0.37 |
| Li | 0.005 | <0.0005 | <0.0005 | 0.005 | 0.005 | 0.143 |
| K | <0.005 | <0.005 | 0.15 | 0.093 | 0.102 | <0.005 |
| Na | 0.008 | 0.042 | 0.008 | 0.09 | 0.006 | 0.004 |

| | | | | | | |
|---|---|---|---|---|---|---|
| *Conforme à l'invention, voir revendication 1 | | | | | | |

Ces éléments sont susceptibles de jouer un rôle de fondant pour la gangue formée autour de la goutte et donc de faciliter le détachement de celle-ci.

Il est à remarquer qu'un comportement similaire peut être attendu avec les autres alcalins tels le rubidium et le césium. Ces éléments peuvent être apportés sous forme d'oxydes ou de fluorides par exemple. Ils peuvent également être apportés par des feldspaths, cryolithes ou des oxydes complexes par exemple, ainsi que par l'intermédiaire du liant servant à la granulation éventuelle du flux.

Sur la figure 4 est montrée l'évolution du courant de transition mesuré en fonction de la quantité de CO₂ dans le mélange CO₂/argon mis en oeuvre pour un fil plein n° Fill et 5 fils fourrés différents n°G007, G008, G009, G010 et G012. Ces fils contiennent tous des alcalins mais avec plus ou moins de silicium dans des quantités assez faibles.

Les performances de ces différents fils sont comparées à celles des fils pleins n°G002 et G004 (cf. Figure 2).

Parmi les trois alcalins étudiés (lithium, sodium et potassium), on constate que le sodium (fil n°G008), non convert par la presente invention, présente les performances les moins bonnes puis que son comportement se rapproche du fil de référence (n°Fil 1).

Les fils contenant du lithium sont par contre particulièrement performants puisque, même pour un taux très faible (G007, non convert par la presente invention, non convert par la presente invention: 005% Li), on constate une amélioration par rapport aux deux fils de référence à bas silicium (fils n°G002 et G004 - Transitions à 240 A / 8% de CO₂, et 240 A / 22% de CO₂, resp.), avec une transition à 26% de CO₂ sous 240 A.

Néanmoins, les performances restent comparables aux courants plus élevés.

L'effet du lithium est encore plus visible avec le fil n°G012 (0,143% Li), non couvert par la presente invention, pour lequel la transition est observée à plus de 40% en volume de CO₂ sous 240 A et même au-delà de 50% en volume de CO₂ pour un courant supérieur à 330 A.

Le potassium produit également un effet bénéfique, puisque les performances du fil n°G009 (0,143% K), non couvert par la presente invention, sont comparables à celles du fil au lithium. Une concentration supérieure est cependant necessaire pour produire un effet comparable.

Le fil présentant les meilleures performances (n°G010) est , conformément à l'invention, celui rassemblant les deux alcalins ayant donné de bons résultats (lithium et potassium) ; la transition vers le régime de pulvérisation axiale est alors observable pour des taux de CO₂ supérieurs à 50% sous des courants usuels de 300 à 450 ampères.

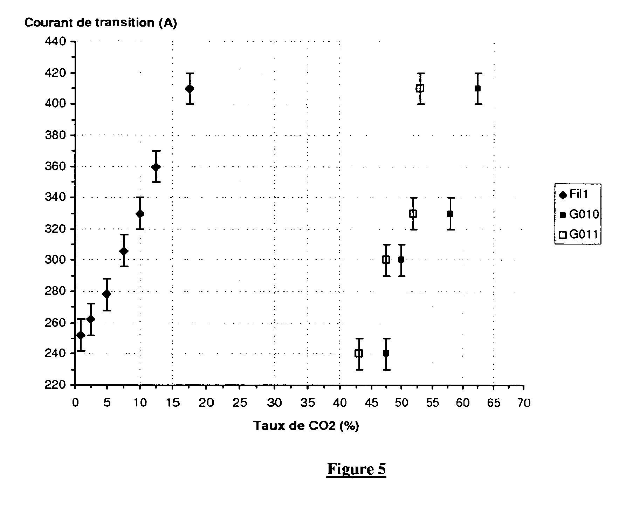

Enfin, est schématisé en Figure 5, les résultats obtenus avec le fil fourré n°G011, conformément à l'invention, qui contient un taux de silicium plus élevé que les fils fourrés de la Figure 4, mais comparable à celui du fil n°Fill, avec les mêmes alcalins que le fil fourré n°G010.

Si les performances du fil fourré n°G011, conformément à l'invention, sont un peu moins bonnes que celles du fil n°G010 (transition à 50% de CO₂ sous 260 A), il présente tout de même une amélioration considérable, en termes de transition, par rapport au fil de référence n°Fil 1, puisqu'il permet d'obtenir le régime de pulvérisation axiale pour des taux de CO₂ supérieur à 50% sous des courants de 410 A.

## Revendications

1. Fil fourré de soudage sans laitier formé d'une enveloppe externe en acier contenant de la poudre de fer et des éléments de remplissage, lesdits éléments de remplissage représentant de 10 à 30 % de la masse totale du fil, et contenant, par rapport à la masse totale du fil, de 0,015 à 0,12 % de carbone, de 0,10 à 0,70 % de silicium, de 0,1 à 2.5 % de manganèse, **caractérisé en ce qu'**il contient en outre de 0,005 à 0,3 % de lithium et de 0,01 à 0,5% de potassium.

2. Fil selon la revendication 1, **caractérisé en ce qu'**il contient de 0.015 à 0,070% de carbone, de 0,1 à 0,6% de silicium et/ou de 0.5 à 2% de manganèse.

3. Fil selon l'une des revendications 1 ou 2, **caractérisé en ce qu'**il contient de 0.015 à 0,060% de carbone, de 0,1 à 0,5% de silicium et/ou de 0.7 à 2% de manganèse.

4. Fil selon l'une des revendications 1 à 3, **caractérisé en ce qu'**il continent en outre de 0,01 à 0,3% de sodium, de 0,01 à 0,9% de titane et/ou de 0,01 à 0,4% de lanthane.

5. Fil selon l'une des revendications 1 à 4, **caractérisé en ce qu'**il contient de 0,005 à 0,2% de lithium, de préférence de 0,005 à 0,15 % de lithium.

6. Fil selon l'une des revendications 1 à 5, **caractérisé en ce qu'**il contient de 0,01 à 0,4% de potassium, de préférence de 0,01 à 0,3% de potassium.

7. Fil selon l'une des revendications 1 à 6, **caractérisé en ce qu'**il contient de 0,01 à 0,4% de zirconium

8. Fil selon l'une des revendications 1 à 7, **caractérisé en ce qu'**il contient de 0,01 à 0,2% de sodium, de 0,01 à 0,8% de titane, de 0,01 à 0,3% de zirconium et/ou de 0.01 à 0.3% de lanthane, de préférence de 0,01 à 0,15% de sodium, de 0,01 à 0,7% de titane, de 0,01 à 0,2% de zirconium, de 0.01 à 0.2% de lanthane.

9. Fil selon l'une des revendications 1 à 8, **caractérisé en ce que** les éléments de remplissage contiennent, par rapport à la masse totale du fil, moins de 0.9% de carbone, de 0.1 à 0.7 de silicium, moins de 2.4% de manganèse, de 0,005 à 0,3 % de lithium, de 0,01 à 0,5% de potassium, de 0,01 à 0,3% de sodium, de 0,01 à 0,9% de titane, de 0,01 à 0,4% de zirconium et de 0.01 à 0.4% de lanthane.

10. Fil selon la revendication 1, **caractérisé en ce que** l'enveloppe externe est en acier carbone-manganèse.

11. Fil selon la revendication 10, **caractérisé en ce que** la teneur en carbone (C) est comprise entre 0.02% et 0.10% et la teneur en manganèse (Mn) est comprise entre 0.1% et 1 % par rapport à la masse totale de l'enveloppe.

12. Procédé de soudage à l'arc électrique de type MIG/MAG, mettant en oeuvre un fil fourré fusible et un mélange gazeux de soudage contenant du CO₂, dans lequel on réalise au moins un joint de soudure sur une ou plusieurs pièces métalliques, par fusion progressive par l'arc électrique du fil fourré, **caractérisé en ce qu'**on utilise un fil fourré sans laitier selon les revendications 1 à 11.

13. Procédé selon la revendication 12, **caractérisé en ce que** le mélange gazeux de soudage contient du CO₂ en une proportion d'au moins 30% en volume, et de l'argon pour le reste.

14. Procédé selon la revendication 12, **caractérisé en ce que** le mélange gazeux de soudage contient du CO₂ en une proportion d'au moins 40% en volume, et de l'argon pour le reste, de préférence une proportion de CO₂ d'au moins 50% en volume.

15. Procédé selon la revendication 12, **caractérisé en ce que** le régime de soudage est de type pulsé, spray-arc ou par courts-circuits,

## Claims

1. Slag-free flux-cored welding wire formed of an outer steel casing, containing iron powder and filler elements, said filler elements constituting from 10 to 30 % of the total mass of the wire, and containing, with respect to the total mass of the wire, from 0.015 to 0.12 % carbon, from 0.10 to 0.70 % silicon and from 0.1 to 2.5 % manganese, **characterised in that** it further contains from 0.005 to 0.3 % lithium and from 0.01 to 0.5% potassium.

2. Wire according to claim 1, **characterised in that** it contains from 0.015 to 0.070 % carbon, from 0.1 to 0.6 % silicon and/or from 0.5 to 2 % manganese.

3. Wire according to either claim 1 or claim 2, **characterised in that** it contains from 0.015 to 0.060 % carbon, from 0.1 to 0.5 % silicon and/or from 0.7 to 2 % manganese.

4. Wire according to any of claims 1 to 3, **characterised in that** it further contains from 0.01 to 0.3 % sodium, from 0.01 to 0.9 % titanium and/or from 0.01 to 0.4 % lanthanum.

5. Wire according to any of claims 1 to 4, **characterised in that** it contains from 0.005 to 0.2 % lithium, preferably from 0.005 to 0.15 % lithium.

6. Wire according to any of claims 1 to 5, **characterised in that** it contains from 0.01 to 0.4 % potassium, preferably from 0.01 to 0.3 % potassium.

7. Wire according to any of claims 1 to 6, **characterised in that** it contains from 0.01 to 0.4 % zirconium.

8. Wire according to any of claims 1 to 7, **characterised in that** it contains from 0.01 to 0.2 % sodium, from 0.01 to 0.8 % titanium, from 0.01 to 0.3 % zirconium and/or from 0.01 to 0.3 % lanthanum, preferably from 0.01 to 0.15 % sodium, from 0.01 to 0.7 % titanium, from 0.01 to 0.2 % zirconium and from 0.01 to 0.2 % lanthanum.

9. Wire according to any of claims 1 to 8, **characterised in that** the filler elements contain, with respect to the total mass of the wire, less than 0.9 % carbon, from 0.1 to 0.7 % silicon, less than 2.4 % manganese, from 0.005 to 0.3 % lithium, from 0.01 to 0.5 % potassium, from 0.01 to 0.3 % sodium, from 0.01 to 0.9 % titanium, from 0.01 to 0.4 % zirconium and from 0.01 to 0.4 % lanthanum.

10. Wire according to claim 1, **characterised in that** the outer casing is made of carbon-manganese steel.

11. Wire according to claim 10, **characterised in that** the carbon (C) content is between 0.02 % and 0.10 %, and the manganese (Mn) content is between 0.1 % and 1 %, with respect to the total mass of the casing.

12. Electric arc welding method of the MIG/MAG type, using a fusible flux-cored wire and a gaseous CO₂-containing welding mixture, at least one weld joint being carried out on one or more metal parts by gradual electric arc fusion of the flux-cored wire, **characterised in that** a slag-free flux-cored wire according to claims 1 to 11 is used.

13. Method according to claim 12, **characterised in that** the gaseous welding mixture contains CO₂ at a proportion of at least 30 % by volume, and argon for the remainder.

14. Method according to claim 12, **characterised in that** the gaseous welding mixture contains CO₂ at a proportion of at least 40 % by volume, and argon for the remainder, preferably containing CO₂ at a proportion of at least 50 % by volume.

15. Method according to claim 12, **characterised in that** the welding process is of the pulsed, spray-arc or short-circuit type.

## Patentansprüche

1. Schlackefreier Schweißfülldraht, der von einer äußeren Umhüllung aus Stahl gebildet ist, die Eisenpulver und Füllelemente enthält, wobei die Füllelemente 10 bis 30 % der Gesamtmasse des Drahtes darstellen, und, relativ zu der Gesamtmasse des Drahtes, 0,015 bis 0,12 % Kohlenstoff, 0,10 bis 0,70 % Silizium und 0,1 bis 2,5 % Mangan enthalten, **dadurch gekennzeichnet, dass** er ferner 0,005 bis 0,3 % Lithium und 0,01 bis 0,5 % Kalium enthält.

2. Draht nach Anspruch 1, **dadurch gekennzeichnet, dass** er 0,015 bis 0,070 % Kohlenstoff, 0,1 bis 0,6 % Silizium und/oder 0,5 bis 2 % Mangan enthält.

3. Draht nach einem der Ansprüche 1 oder 2, **dadurch gekennzeichnet, dass** er 0,015 bis 0,060 % Kohlenstoff, 0,1 bis 0,5 % Silizium und/oder 0,7 bis 2 % Mangan enthält.

4. Draht nach einem der Ansprüche 1 bis 3, **dadurch gekennzeichnet, dass** er ferner 0,01 bis 0,3 % Natrium, 0,01 bis 0,9 % Titan und/oder 0,01 bis 0,4 % Lanthan enthält.

5. Draht nach einem der Ansprüche 1 bis 4, **dadurch gekennzeichnet, dass** er 0,005 bis 0,2 % Lithium, vorzugsweise 0,005 bis 0,15 % Lithium, enthält.

6. Draht nach einem der Ansprüche 1 bis 5, **dadurch gekennzeichnet, dass** er 0,01 bis 0,4 % Kalium, vorzugsweise 0,01 bis 0,3 % Kalium, enthält.

7. Draht nach einem der Ansprüche 1 bis 6, **dadurch gekennzeichnet, dass** er 0,01 bis 0,4 % Zirkonium enthält.

8. Draht nach einem der Ansprüche 1 bis 7, **dadurch gekennzeichnet, dass** er 0,01 bis 0,2 % Natrium, 0,01 bis 0,8 % Titan, 0,01 bis 0,3 % Zirkonium und/oder 0,01 bis 0,3 % Lanthan, vorzugsweise 0,01 bis 0,15 % Natrium, 0,01 bis 0,7 % Titan, 0,01 bis 0,2 % Zirkonium, 0,01 bis 0,2 % Lanthan, enthält.

9. Draht nach einem der Ansprüche 1 bis 8, **dadurch gekennzeichnet, dass** die Füllelemente, relativ zu der Gesamtmasse des Drahtes, weniger als 0,9 % Kohlenstoff, 0,1 bis 0,7 % Silizium, weniger als 2,4 % Mangan, 0,005 bis 0,3 % Lithium, 0,01 bis 0,5 % Kalium, 0,01 bis 0,3 % Natrium, 0,01 bis 0,9 % Titan, 0,01 bis 0,4 % Zirkonium und 0,01 bis 0,4 % Lanthan, enthalten.

10. Draht nach Anspruch 1, **dadurch gekennzeichnet, dass** die äußere Umhüllung aus Kohlenstoff-Manganstahl ist.

11. Draht nach Anspruch 10, **dadurch gekennzeichnet, dass** der Gehalt an Kohlenstoff (C) zwischen 0,02 % und 0,10 % und der Gehalt an Mangan (Mn) zwischen 0,1 % und 1 % relativ zu der Gesamtmasse der Umhüllung beträgt.

12. Lichtbogen-Schweißen-Verfahren vom Typ MIG/MAG, das einen Schmelz-Fülldraht und ein gasförmiges Schweißgemisch, das CO₂ enthält, verwendet, wobei mindestens eine Schweißverbindung auf einem oder mehreren metallischen Teilen, durch progressive Schmelzung durch den Lichtbogen des Fülldrahts, durchgeführt wird, **dadurch gekennzeichnet, dass** ein schlackefreier Fülldraht nach den Ansprüchen 1 bis 11 verwendet wird.

13. Verfahren nach Anspruch 12, **dadurch gekennzeichnet, dass** das gasförmige Schweißgemisch CO₂ in einem Verhältnis von mindestens 30 Volumen-% und Argon, was den Rest betrifft, enthält.

14. Verfahren nach Anspruch 12, **dadurch gekennzeichnet, dass** das gasförmige Schweißgemisch CO₂ in einem Verhältnis von mindestens 40 Volumen-% und Argon, was den Rest betrifft, vorzugsweise in einem CO₂-Verhältnis von mindestens 50 Volumen-%, enthält.

15. Verfahren nach Anspruch 12, **dadurch gekennzeichnet, dass** das Schweißverfahren des Typs Puls-, Sprühlichtbogen- oder Kurzschluss-Schweißverfahren ist.
